# EUROPÄISCHE PATENTANMELDUNG

(11) **EP 4 102 091 A1**
(43) Veröffentlichungstag der Anmeldung: **14.12.2022**
(21) Anmeldenummer: 22172932.0
(22) Anmeldetag: 12.05.2022
(51) Int. Cl.: F16D 13/68, F16D 23/12

(54) **KUPPLUNGSANORDNUNG**

(30) Priorität: 02.06.2021 DE 102021205655
(71) Anmelder: MAGNA Powertrain GmbH & Co KG, 8502 Lannach (AT)
(72) Erfinder: SCHLACHTER, Philipp, 8053 Graz (AT); STEINWENDER, Herbert, 8144 Haselsdorf-Tobelbad (AT)
(74) Vertreter: Zangger, Bernd

(57) **Zusammenfassung**

Kupplungsanordnung (10) mit einem Kupplungskorb (14), in dem Lamellenpakete von Außenlamellen (12') und Innenlamellen (13') von einem Innenlamellenträger (13) und einem Außenlamellenträger (12) getragen werden, und einem Kolben (1) zur Betätigung der Kupplungsanordnung (10) durch axiale Verschiebung der Außenlamellen (12') im Außenlamellenträger (12) und einer Feder (2), wobei der Kolben und die Feder aus Blechen unterschiedlicher Eigenschaften hergestellt und zu einer Baugruppe vormontiert sind

## Beschreibung

### Kupplungsanordnung

Die Erfindung betrifft eine Kupplungsanordnung mit einem Kupplungskorb, in dem Lamellenpakete von Außenlamellen und Innenlamellen von einem Innenlamellenträger und einem Außenlamellenträger getragen werden, und einem Kolben zur Betätigung der Kupplungsanordnung durch axiale Verschiebung der Außenlamellen im Außenlamellenträger und einer Feder.

### Stand der Technik

Eine Kupplungseinrichtung umfasst üblicherweise ein Betätigungselement, das dazu eingerichtet ist, ein zugeordnetes Lamellenpaket axial zusammenzupressen, um eine Übertragung von Drehmoment über diese Kupplung zu ermöglichen. Der Kolben ist aus Sintermaterial gefertigt, der durch seine Fingerausprägung zu einer ungleichmäßiger Lamellenbelastung führt.

Um die Kupplung wieder zu öffnen und den Drehmomentfluss zu unterbrechen, reicht es üblicherweise nicht aus, die axiale Anpresskraft auf das Betätigungselement zurückzunehmen. Vielmehr muss das Betätigungselement aktiv vom Lamellenpaket entfernt werden. Zu diesem Zweck ist ein elastisches Element vorgesehen, das auf das Betätigungselement wirkt. Das elastische Element ist üblicherweise als eine oder mehrere Schraubenfedern oder als Tellerfeder ausgeführt. Dabei kann eine Teileanzahl der Kupplungseinrichtung durch den Rückstellmechanismus mit allen weiteren benötigten Teilen beträchtlich erhöht sein.

Eine verbesserte Ausführung findet sich in der DE 10 2015 205 832 A1 wieder.

Sie enthält ein Betätigungsmittel für eine Kupplungseinrichtung. Sowohl das Betätigungsmittel als auch ein Außenlamellenträger sind topfförmig ausgebildet, indem sie jeweils einen ersten Abschnitt aufweisen, der sich vornehmlich in radialer Richtung erstreckt, und einen zweiten Abschnitt, der sich von der radialen Außenseite des ersten Abschnitts aus vornehmlich in axialer Richtung erstreckt. Sowohl das Betätigungsmittel als auch der Außenlamellenträger sind aus einem Blech herstellbar, insbesondere mittels Stanzen, Pressen oder Ziehen.

Am Betätigungsmittel ist ein Finger ausgestellt, der sich in radialer Richtung erstreckt. Dabei kann das am Betätigungsmittel fest anliegende Ende wahlweise radial innen oder radial außen liegen. Der Finger kann sich auch in axialer Richtung oder in einer beliebigen anderen Richtung in der Drehebene um die Drehachse erstrecken. Der Finger ist durch Stanzen und Biegen geformt. Die elastischen Eigenschaften des Fingers, sind durch die Wahl der Länge, der Breite und des Querschnittsverlaufs beeinflussbar. Normalerweise sind nicht nur einer, sondern mehrere Finger am Betätigungsmittel vorgesehen, die auf einem Umfang um die Drehachse versetzt angeordnet sind. Das elastisch aufgebaute Betätigungsmittel ist über ein Axialnadellager am angrenzenden Bauelement abgestützt.

DE 10 2019 124 190 A1 zeigt eine Trennkupplung nach Art einer Mehrscheibenkupplung oder Lamellenkupplung, bspw. als direkt betätigte trockene (Einzel-Trennkupplung für einen Antriebsstrang eines Kraftfahrzeugs, mit einem Außenlamellenträger, in dem drehfest, aber axial verlagerbar Reibscheiben, die Außenlamellen, bspw. ausgebildet als Stahllamellen, einlegbar sind, wobei der Außenlamellenträger, bspw. über eine Vernietung, Verschraubung oder Verschweißung, dreh- und axialfest an einem Drehmomentweitergabebauteil, wie einer Nabe, befestigt ist, wobei ein Anpresselement, etwa nach Art eines Drucktopfes oder eines Hebels, zum Axialverschieben wenigstens einer der Reibscheiben für den Kraftschlussfall vorhanden ist, wobei das Anpresselement mit einer Rückstellfeder in Kontakt steht, die zum Aufheben des Kraftschlusses vorgesehen ist.

Es ist Aufgabe der Erfindung, eine kostengünstige Lösung für Kolben und Feder bereitzustellen, die axial schmal baut, die Kupplungslamellen gleichmäßig entlang des Umfangs belastet, als elastisches Element in der Kupplungsanordnung wirkt, um die Kupplung weicher und gut regelbar zu machen, sowie zu einer gleichmäßigeren Belastung des Axialnadellagers führt.

### Beschreibung der Erfindung

Die Aufgabe wird gelöst mit einem Kupplungsanordnung mit einem Kupplungskorb, in dem Lamellenpakete aus Außenlamellen und Innenlamellen von einem Innenlamellenträger und einem Außenlamellenträger getragen werden, und einem Kolben zur Betätigung der Kupplungsanordnung durch axiale Verschiebung der Außenlamellen und einer Feder, wobei der Kolben und die Feder aus Blechen unterschiedlicher Eigenschaften hergestellt und zu einer Baugruppe vormontiert sind.

Der Kolben weist einen sich axial erstreckenden Kolbenbund und eine ringförmige Kolbenfläche auf, wobei eine topfartige Ausgestaltung des Kolbens vorliegt.

Ausgehend vom der Kolbenfläche verjüngt sich der Kolben in Richtung auf den Kolbenbund hin.

Dabei weist die ringförmige Kolbenfläche eine Balligkeit auf, womit sie an dem Außenlamellenträger anliegt und Anpressdruck aufbringen kann.

Die topfartige Ausgestaltung weist eine Balligkeit auf, die axial an einem Axialnadellager als Ausrücklager angepresst ist.

Der Kolben weist Zähne auf, mit denen er in der Lamellenverzahnung des Kupplungskorbs axial verschieblich geführt ist.

Der Kolben weist Durchbrüche in der topfartigen Ausgestaltung auf, in die Federfinger der Feder ausgehend von einem ringförmigen Federring eingreifen.

In einer Ausführung sind Laschen an den Durchbrüchen vorhanden, so dass die Federfinger mit einer Bajonettbewegung eingeführt sind.

Die Federfinger sind an ihrem zur Achse A zeigenden Ende in Richtung auf die Lamelllenpakete hin gekrümmt und weisen eine Balligkeit auf, die an dem Kolben anliegt.

Der Federring weist Laschen auf, die sich am Kupplungskorb in Zinnen abstützen und zentrieren.

Durch den Einsatz von zwei einfachen Blech-Stanz-Umformteilen wird ein kostengünstiges vormontierbares Federkolbensystem realisiert, das durch Wahl der Blechwandstärke und des jeweils optimalen Werkstoffes eine einstellbare Kupplungssteifigkeit ermöglicht und zu gleichmäßigen Belastungen an Lamellen und dem Axialnadellager führt.

### Beschreibung der Figuren

Figur 1 zeigt eine Kupplungsanordnung offen,
Figur 2 zeigt eine Kupplungsanordnung geschlossen,
Figur 3A zeigt ein Schnittbild einer Kolben-Feder-Baugruppe,
Figur 3B zeigt eine Aufsicht auf die Kolben-Feder-Baugruppe,
Figuren 4A bis 4C zeigen eine alternative Ausführungsform der Kolben-Feder-Baugruppe,

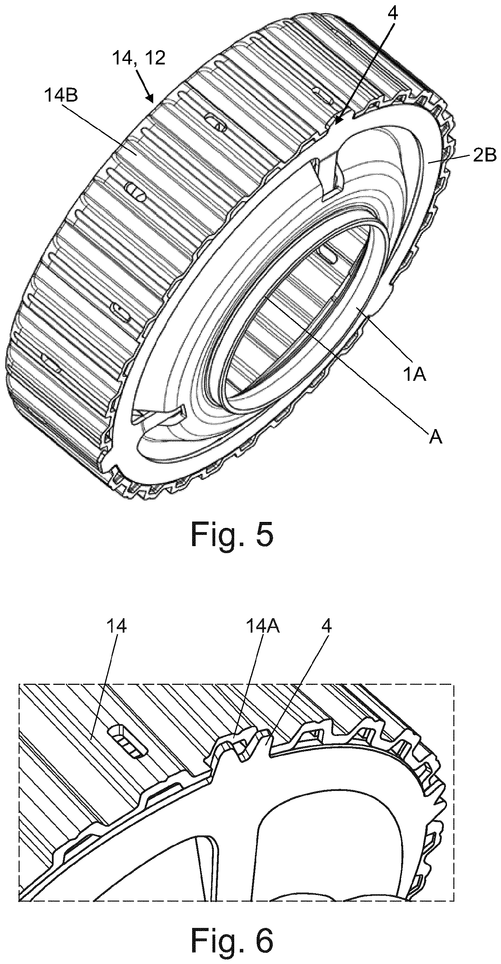

Figur 5 zeigt eine Ansicht der Kupplungsanordnung,
Figur 6 zeigt ein Detail an der Kupplungsanordnung,
Figur 7 zeigt ein Detail in Schnittdarstellung der Balligkeit der Kolbenfläche.

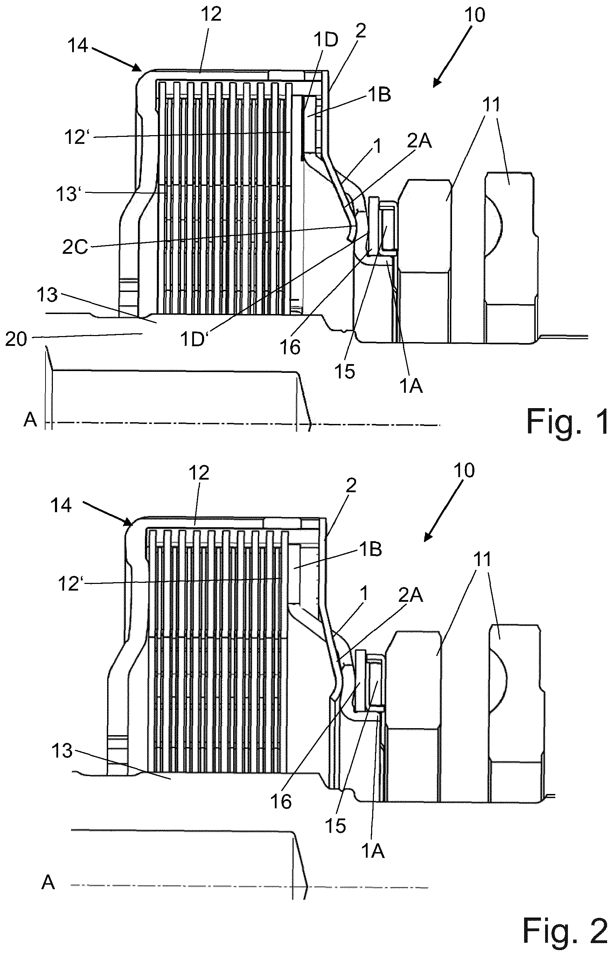

Die Figuren 1 und 2 zeigen eine Kupplungsanordnung 10, die rotationssymmetrisch zur Achse A aufgebaut ist.

Ein Kupplungskorb 14 umfasst einen Außenlamellenträger 12 und einen Innenlamellenträger 13. Der Kupplungskorb 14 ist fest mit der tragenden Welle 20 verbunden, wobei der Innenlamellenträger 13 ebenfalls durch die Welle 20 dargestellt ist.

Das Lamellenpaket der Innenlamellen 13' sitzt somit auf der Welle 20.Der Außenlamellenträger 12 ist ein trommelartiges Gebilde, das eine axiale Zahnstruktur aufweist. Innerhalb des Außenlamellenträgers 12 sind die Außenlamellen 12' axial verschieblich gelagert. Ein Kolben 1 ist direkt mit den Außenlamellen12' angelegt oder anlegbar und wird von einer Feder 2 durchdrungen.

Der Kolben 1 ist über eine Lagerscheibe 16 an einem Axialnadellager 15 gelagert. Eine zweiteilige Kugelrampe 11 ist Teil des Betätigungssystems.

Figur 1 zeigt den Zustand der Kupplungsanordnung im offenen Zustand, Figur 2 im Zustand der Betätigung.

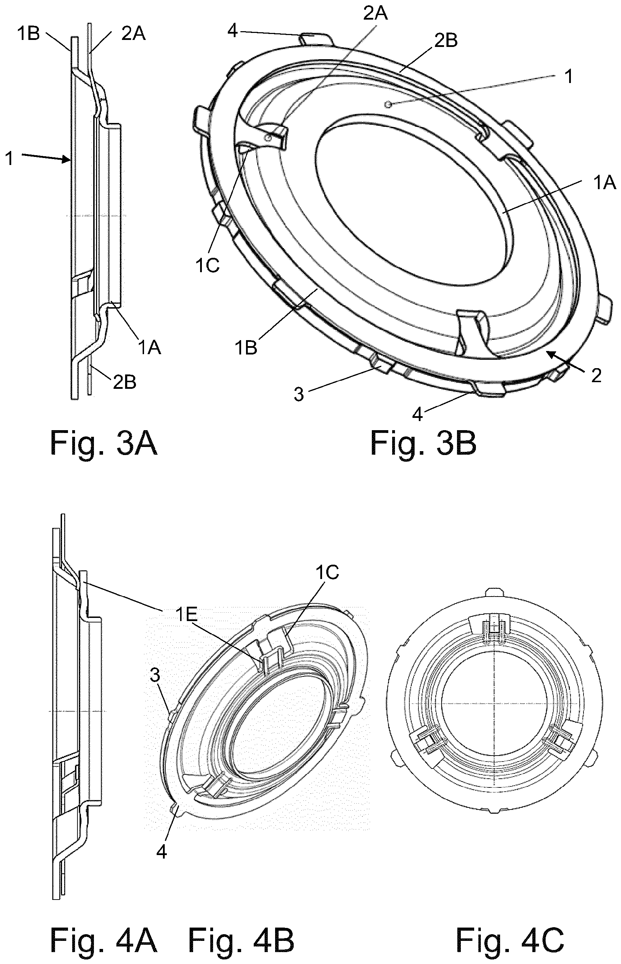

In den Figuren 3A und 3B wird im Detail auf die Ausbildung des Kolbens 1 und die Feder 2 eingegangen, die beide Blechstanzteile sind.

Der Kolben 1 und die Feder 2 haben gegenläufige Anforderungen an Funktion und Konstruktion und sind nur unzureichend in einem einzigen Blechteil mit einheitlichen Werkstoffeigenschaften umsetzbar.

Der Kolben soll hohe Druckkräfte bei vernachlässigbarer elastischer Verformung übertragen können und wird aus gut umformbaren Blechen und für hohe Steifigkeit des Kolbens mit erheblicher Wandstärke gefertigt.

Die Rückstellfeder hingegen soll hohe Verformungen bei geringen Kräften ermöglichen, um im entlasteten Zustand die Belastung auf das Ausrücklager gering zu halten, große Wege zu ermöglichen und wird auch aus Gründen der elastischen Dauerhaltbarkeit aus Federstahl gefertigt.

Um beide Funktionen optimal erfüllen zu können stellt das gefügte Feder-Kolben System keinen Kompromiss, sondern eine technische Lösung dar, die beide Anforderungen mit nur zwei Blechstanzteilen optimal kombiniert.

Ein Blechteil bildet den steifen Kolben zur Übertragung der hohen Druckkräfte bei minimaler Verformung dar und das zweite Blech aus Federstahl gibt die ideal dauerfeste Elastizität, die ein häufiges Lüftspieldurchfahren der Kupplungsanordnung über einen weiten Bereich bei geringer Kraft ermöglicht.

Der Kolben 1 besitzt am Außendurchmesser einen Zentriersitz im Kupplungskorb 14, genauer am Außenlamellenträger 12, und wird über gestanzte Zähne 3 gegen das Verdrehen im Kupplungskorb 14 gesichert. Die Zähne 3 dienen auch zur Führung in der Lamellenverzahnung des Kupplungskorbes 14 und garantieren eine lineare Verschiebung. Der Kolben 1 weist zudem eine Kolbenfläche 1B auf, die ein geschlossenes Kreissegment ist, welches ganzflächig auf den Rand des Außenlamellenträgers 12 drückt. Um sich optimal auch bei Verformungen der Kolbenfläche 1B oder des Außenlamellenträgers 12 anschmiegen zu können, weist die Kolbenfläche 1B eine leichte Balligkeit 1D auf, um einen Wirkradius darzustellen.

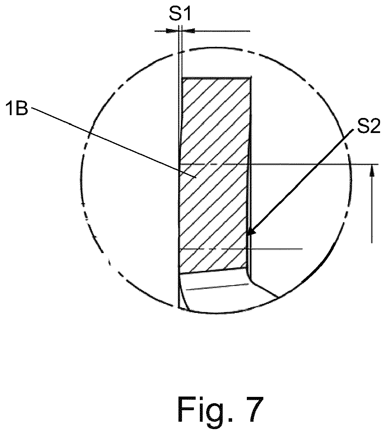

Diese Balligkeit ist in Figur 7 dargestellt.

An seinem axialen Innendurchmesser besitzt der Kolben 1 einen Kolbenbund 1A, um das Axialnadellager 15 zur Kugelrampe 11 hin zu zentrieren. Ebenso ist auch eine Balligkeit 1D' am mittleren Durchmesser des Axialnadellagers 15 am Kolbenbund 1A vorgesehen, um bei einer Verformung des Kolbens 1 immer das Axialnadellager 15 zentral zu belasten.

Um die ringförmige Belastung durch die Balligkeit 1D' auf das Axialnadellager 15 gleichmäßig auszugestalten, wird die dicke Lagerscheibe16 für das Axialnadellager 15 eingesetzt. Dadurch wird in jeder Kolbenposition und bei etwaigen Verformungen eine gleichmäßige, flächige Lagerbelastung der Lagernadeln realisiert. Zudem dient die Lagerscheibe als gehärtete Laufscheibe für die Nadel des Lagers.

Als getrenntes Bauteil liegt eine Feder 2 vor, die aus einem Federring 2B mit daran angebrachten Federfingers 2A besteht. Am Außenumfang des Federrings 2B sind Federlaschen 4 zur Zentrierung im Kupplungskorb angebracht.

Der Kolben 1 besitzt ausgestanzte Durchbrüche 1C, um die Federfinger 2A so anordnen zu können, dass die Federfinger 2A über den Kolben 1 die dicke Lagerscheibe 16 gegen das Axialnadellager 15 gegen die Kugelrampe 11 presst bzw. den Kolben 1 in jeder Kupplungsposition eine Vorspannung auf den Verbund Kolben 1, Lagerscheibe 16, Axialnadellager 15 und Kugelrampe 11 aufrechterhält und in die Position voll gelüftet zurückgedrückt werden kann.

Im einfachsten Fall sind die Durchbrüche 1C einfache gestanzte Löcher, in die die Federfinger 2A durch Aufbiegen der Federfinger 2A eingeschnappt werden können, so dass der Kolben 1 und die Feder 2 eine vormontierte Einheit bilden, so dass sie in der Montage der Kupplungsanordnung wie ein einziges Teil zu montieren sind.

In einer weiterem Ausführungsform nach den Figuren 4A, 4B, 4C bleiben Laschen 1E im Kolben 1 an den Durchbrüchen 1C stehen, hinter die die Federfinger 2A in Art eines Bajonettverschlusses gesteckt und verdreht montiert werden.

Die Federfinger 2A sind am Außendurchmesser ebenfalls durch einen Federring 2B mit einander verbunden und besitzen wie der Kolben 1 einen Zentrierdurchmesser im Kupplungskorb 14 und Federlaschen 4 als Verdreh-Sicherung im Kupplungskorb 14.

Die Feder 2 stützt sich noch zusätzlich axial am Kupplungskorb 14 stirnseitig ab und die Federkraft zum Axialnadellager 15 erzeugen zu können.

Um die stirnseitige Abstützung am Kupplungskorb 14 einfach zu realisieren, bietet es sich an, am Kupplungskorb 14 kleinen Zinnen 14A auszustanzen, die die Verdreh-Sicherung und die axiale Abstützung mit den Federlaschen 4 in einem realisieren.

Durch Einsatz von Blechumformteile kann die axiale Federfunktion durch Einfädeln bzw. Bajonettverschluss einfach realisiert werden, die Kupplungssteifigkeit durch die Blechstärke eingestellt und durch Bombierungen, das heißt die Ausprägung eines Radius und einer Ballgkeit, die Belastung angrenzender Bauteile optimiert werden.

Auch die Feder 2 besitzt am Berührungspunkt 2C zum Blech des Kolbens 1 eine Balligkeit durch einen umgeformten Radius, um ebenso den Anpresspunkt bei der Verformung der Feder nicht signifikant zu ändern und ein gutes Gleiten von Feder 2 zu Kolben1 im Berührungspunkt 2C zu ermöglichen.

Der Kolben 1 besitzt am Außendurchmesser ein paar gestanzte Zähnen 3, mit denen er sich in der Lamellenverzahnung 14B des Kupplungskorb 14 zentriert und somit lediglich axial in Richtung der Achse A verschieblich ist.

Die Feder 2 besitzt ebenfalls Federlaschen 4 am Außendurchmesser, an denen sich die Feder am offenen Kupplungskorb 14 an der Stirnseite axial abstützt. Für diese Abstützung wurde im Kupplungskorb 14 zusätzliche kleine Zinnen 14A am Ende ausgestanzt, damit sich die Feder 2 ebenso über den Außendurchmesser im Kupplungskorb 14 zentrieren kann.

Wird der Kolben 1 durch die Kugelrampe 11 über das Axialnadellager 15 axial verschoben, entsteht in den verformten Federfingern 2A der Feder 2 eine Erhöhung der Federkraft entsprechende der Federkennlinie, die ihn wieder in die gelüftete Kolbenposition zurückschieben, wenn die Aktuierungskraft wieder abnimmt.

### Bezugszeichen:

- 1: Kolben
- 1A: Kolbenbund
- 1B: Kolbenfläche
- 1C: Durchbruch
- 1D, 1D': Balligkeiten
- 1E: Lasche
- 2: Feder
- 2A: Federfinger
- 2B: Federring
- 2C: Berührungspunkt
- 3: Zähne
- 4: Federlaschen
- 10: Kupplungsanordnung
- 11: zweiteilige Kugelrampe
- 12: Außenlamellenträger
- 12': Außenlamellen
- 13: Innenlamellenträger
- 13: Innenlamellen
- 14: Kupplungskorb
- 14A: Zinnen
- 14B: Lamellenverzahnung
- 15: Axialnadellager
- 16: Lagerscheibe

## Patentansprüche

1. Kupplungsanordnung (10) mit einem Kupplungskorb (14), in dem Lamellenpakete von Außenlamellen (12') und Innenlamellen (13') von einem Innenlamellenträger (13) und einem Außenlamellenträger (12) getragen werden, und einem Kolben (1) zur Betätigung der Kupplungsanordnung (10) durch axiale Verschiebung der Außenlamellen (12') im Außenlamellenträger (12) und einer Feder (2), **dadurch gekennzeichnet, dass** der Kolben (1) und die Feder (2) aus Blechen unterschiedlicher Eigenschaften hergestellt und zu einer Baugruppe vormontiert sind und dass der Kolben (1) einen sich axial erstreckenden Kolbenbund (1A) und eine ringförmige Kolbenfläche (1B) aufweist, wobei eine topfartige Ausgestaltung des Kolbens (1) vorliegt und in der topfartigen Ausgestaltung eine Balligkeit (1D') axial an einem Axialnadellager (15) als Ausrücklager angepresst ist, wobei eine dicke Lagerscheibe (16) für das Axialnadellager (15) eingesetzt ist, wobei die Lagerscheibe als gehärtete Laufscheibe für die Nadel des Lagers dient.

2. Kupplungsanordnung (10) nach Anspruch 1, **dadurch gekennzeichnet, dass** die ringförmige Kolbenfläche (1B) eine Balligkeit (1D) aufweist, womit sie auf die Außenlamellen drückt.

3. Kupplungsanordnung (10) nach einem der vorhergehenden Ansprüche, **dadurch gekennzeichnet, dass** der Kolben (1) Zahne (3) aufweist, mit denen er in der Lamellenverzahnung (14B) des Kupplungskorbs (14) axial verschieblich geführt ist.

4. Kupplungsanordnung (10) nach einem der vorhergehenden Ansprüche, **dadurch gekennzeichnet, dass** der Kolben (1) Durchbrüche (1C) in der topfartigen Ausgestaltung aufweist, in die Federfinger (2A) der Feder (2) ausgehend von einem ringförmigen Federring (2B) eingreifen.

5. Kupplungsanordnung (10) nach Anspruch 4, **dadurch gekennzeichnet, dass** Laschen (1E) an den Durchbrüchen (1C) vorhanden sind, so dass die Federfinger (2A) mit einer Bajonettbewegung eingeführt sind.

6. Kupplungsanordnung (10) nach einem der vorhergehenden Ansprüche, **dadurch gekennzeichnet, dass** die Federfinger (2A) an ihrem zur Achse (A) zeigenden Ende in Richtung auf die Lamelllenpakete hin gekrümmt sind und eine Balligkeit zu einem Berührungspunkt (2C) aufweisen, die an dem Kolben (1) anliegt.

7. Kupplungsanordnung (10) nach Anspruch 4 bis 6, **dadurch gekennzeichnet, dass** der Federring (2B) Federlaschen (4) aufweist, die sich am Kupplungskorb (14) in Zinnen (14A) abstützen und zentrieren.
